# EUROPEAN PATENT APPLICATION

(11) **EP 4 474 885 A1**
(43) Date of publication of application: **11.12.2024**
(21) Application number: 23178209.5
(22) Date of filing: 08.06.2023
(51) Int. Cl.: G02B 27/14, G02B 27/28

(54) **A BEAM SPLITTING/MIXING MODULE FOR AN OPTICAL SYSTEM AND AN ASSOCIATED OPTICAL SYSTEM**

(71) Applicant: Université de Genève, 1211 Genève 4 (CH)
(72) Inventor: Multian, Volodymyr, 1211 GENEVE 20 (CH); Teyssier, Jérémie, 1211 GENEVE 20 (CH)
(74) Representative: Lavoix

(57) **Abstract**

The present invention concerns a beam splitting/mixing module (30) for an optical system configured to propagate a first light beam (B1) along a first light channel (11);
the module (30) comprising:
- a main optical element (40) able to reflect the first light beam (B1) with a distortion of its polarization state;
- a first compensating optical element (41) identical to the main optical element (40) and able to reflect the first light beam (B1) with a distortion of its polarization state opposite to said distortion of the main optical element (40);
- a pair of corner mirrors (51, 52) arranged to guide the first light beam (B1) between the main optical element (40) and the first compensating optical element (41) by reflecting the first light beam (B1) without distortion of its polarization state.

## Description

### FIELD OF THE INVENTION

The present invention concerns a beam splitting/mixing module for an optical system. The present invention also concerns an optical system associated to such a beam splitting/mixing module.

Particularly, the beam splitting/mixing module according to the invention preserves polarisation state of light while reflecting and/or transmitting it according to geometrical constraints defined by the optical system. The optical system according to the invention can has any application where a fine control of polarization is required such as fluorescence or Raman spectroscopy. This optical system can be used to combine two laser beams and/or two detections channels as for multiphoton microscopy, interferometry or quantum optics.

### BACKGROUND OF THE INVENTION

Preserving polarization state of light in an optical system including reflective and refractive optical elements is a challenge. Upon reflection on a surface or transmission through a medium, the polarisation state of light is modified in a way that cannot be systematically fully controlled. This modification depends on many parameters like the angle of incidence, the anisotropy of the medium, interference effects. In many applications, the control of this polarisation state is essential.

Dichroic mirror or plate beam splitters are optical elements usually made of special coating designed to respectively reflect a spectral region while transmitting another or reflect a part of the light intensity and transmitting the remaining one. Both elements are broadly used in many different applications like microscopy, spectroscopy, interferometry and more generally any optical device where light paths must be split or combined.

On such optical elements, reflected and transmitted polarisation states are modified as the device operates far from normal incidence (usually 45°) with different reflectivity and transmittance for S and P components of the polarisation.

Some documents in the art already propose beam splitting/mixing modules for optical systems, preserving polarisation state. Thus, for example, document WO 2013/029178 A1 proposes a polarisation-maintaining module comprising two identical optical elements arranged to compensate respective polarisation distortions of a light beam. Particularly, these optical elements are arranged to generate opposite polarisation distortions while reflecting and/or transmitting the light beam. Thus, after reflecting and/or transmitting by this module, the light beam preserves its initial polarisation. The polarisation correction principle by inclined mirrors used in this document was explained for example in article L. J. Cox "The Compensation of Instrumental Polarization by Inclined Mirrors" (Monthly Notices of the Royal Astronomical Society, Vol. 176, p. 525-532 (1976)).

The polarisation-maintaining module disclosed in WO 2013/029178 A1 is not however satisfying since the arrangement of the optical elements proposed by this module does not provide a beam geometry compliant with existing optical systems. Thus, this module cannot be used as a replacement module for such systems. Particularly, said polarisation-maintaining module is not suitable to ensure a beam crossing as it is required by the geometry of existing optical systems.

### SUMMARY OF THE INVENTION

One of the aims of the invention is to propose a beam splitting/mixing module which ensures a beam crossing and can thus be used in a large variety of existing optical systems. It allows reflecting and/or transmitting of one or several light beams while preserving their initial polarisation state. Additionally, it remains compact enough to fit in a casing which can be easily inserted in the dedicated splitting/mixing zone of the existing optical systems.

For this purpose, the invention proposes a beam splitting/mixing module for an optical system configured to propagate a first light beam along a first light channel, the first light channel forming at least a first rectilinear portion and a second rectilinear portion designed to cross the first rectilinear portion with a predetermined crossing angle in a splitting/mixing zone of the optical system;
the beam splitting/mixing module being designed to be arranged in the splitting/mixing zone of the optical system and comprising:
- a main optical element designed to be arranged in an extension of the second rectilinear portion and being able to reflect the first light beam with a distortion of its polarization state;
- a first compensating optical element identical to the main optical element, designed to be arranged in an extension of the first rectilinear portion and able to reflect the first light beam with a distortion of its polarization state opposite to said distortion of the main optical element;
- a pair of corner mirrors arranged to guide the first light beam between the main optical element and the first compensating optical element by reflecting the first light beam without distortion of its polarization state.

Provided with these features, the beam splitting/mixing module allows reflection of the first light beam according to a crossing angle substantially equal for example to 90°. Such a beam crossing defined by said crossing angle and allowing that both incident and reflected portions of the light beam remain in a same plane, is used in a large variety of optical systems used for example for multiphoton microscopy, interferometry or quantum optics. Additionally, the beam splitting/mixing module preserves the initial polarisation state of the first light beam, while remaining relatively compact.

Contrary to the polarisation-maintaining module disclosed in WO 2013/029178 A1, the beam splitting/mixing module according to the invention allows reflecting of a first light beam propagated along a first light channel forming two rectilinear portions crossing each other with a predetermined crossing angle. These two rectilinear portions define thus a beam crossing in a same plane. Such an arrangement makes the beam splitting/mixing module compliant with the geometry of existing optical systems.

According to some embodiments, the main optical element defines a reflecting surface arranged to form an angle of substantially 45° with said extension of the second rectilinear portion.

According to some embodiments, the first compensating optical element defines a reflecting surface arranged to form an angle of substantially 45° with said extension of the first rectilinear portion.

According to some embodiments:
- the main optical element defines a plane of incidence perpendicular to its reflecting surface;
- the first compensating optical element defines a plane of incidence perpendicular to its reflecting surface;
- said planes of incidence are perpendicular to each other.

According to some embodiments, each corner mirror comprises two reflecting surfaces defining a common plane of incidence.

According to some embodiments, wherein the pair of corner mirrors comprises:
- a first corner mirror arranged so as the common plane of incidence of its reflecting surfaces is perpendicular to the plane of incidence of the main optical element;
- a second corner mirror arranged so as the common plane of incidence of its reflecting surfaces is perpendicular to the plane of incidence of the first compensating optical element.

According to some embodiments:
- one of the reflecting surfaces of the first corner mirror faces the reflecting surface of the main optical element;
- one of the reflecting surfaces of the second corner mirror faces the reflecting surface of the first compensating optical element.

According to some embodiments, the other reflecting surface of the first corner mirror faces the other reflecting surface of the second corner mirror.

According to some embodiments, said two reflecting surfaces of each corner mirror are arranged perpendicular to each other.

According to some embodiments, said common planes of incidence of the corner mirrors are perpendicular to each other.

According to some embodiments:
- the optical system is further configured to propagate a second light beam along a second light channel, the second light channel forming at least a third rectilinear portion and a fourth rectilinear portion designed to extend the third rectilinear portion, the fourth rectilinear portion coinciding with the second rectilinear portion of the first light channel;
- the main optical element is able to transmit the second light beam with a distortion of its polarization state.

Provided with these features, the beam splitting/mixing module can be used in optical systems where two light beams having different spectral ranges are needed to be split or mixed. In this case, the split light beams can be propagated according to perpendicular directions lying in a same plane as the direction of propagation of the mixed light beams. This type of beam crossing is used in a large variety of optical systems used for example for multiphoton microscopy, interferometry or quantum optics. Thus, the beam splitting/mixing module can be easily used as a replaceable optical module for these systems.

According to some embodiments, the module further comprises a second compensating optical element identical to the main optical element, designed to be arranged in an extension of the third rectilinear portion and able to transmit the second light beam with a distortion of its polarization state opposite to the distortion of the main optical element in respect with the second light beam.

Thanks to these features, the polarisation state of the second light beam can be preserved.

According to some embodiments, the second compensating optical element defines a reflecting surface arranged to form an angle of substantially 45° with said extension of the third rectilinear portion.

According to some embodiments, the second compensating optical element defines a plane of incidence perpendicular to its reflecting surface, said plane of incidence being perpendicular to the plane of incidence of the main optical element and to the plane of incidence of the first compensating element.

The present inventions also relates to an optical system configured to propagate a first light beam along a first light channel, the first light channel forming at least a first rectilinear portion and a second rectilinear portion designed to cross the first rectilinear portion with a predetermined crossing angle in a splitting/mixing zone of the optical system;
wherein the splitting/mixing zone comprises a beam splitting/mixing module, as defined above.

### BRIEF DESCRIPTION OF THE DRAWINGS

The invention and its advantages will be better understood upon reading the following description, which is given by way of non-limiting example and which is made with reference to the appended drawings, in which:
- Figure 1 is a schematic view of an optical system according to the invention, the optical system comprising a beam splitting/mixing module according to the invention;
- Figure 2 is a schematic perspective view of the beam splitting/mixing module of Figure 1;
- Figure 3 is a side view of the beam splitting/mixing module of Figure 2; and
- Figure 4 is a top view of the beam splitting/mixing module of Figure 2.

### DETAILED DESCRIPTION OF THE INVENTION

In the further description and claims, by **"angle of substantially X°",** it is understood that this angle is equal to X° with a measuring error margin normally applied in the field. This margin can for example be +/- 0,1°.

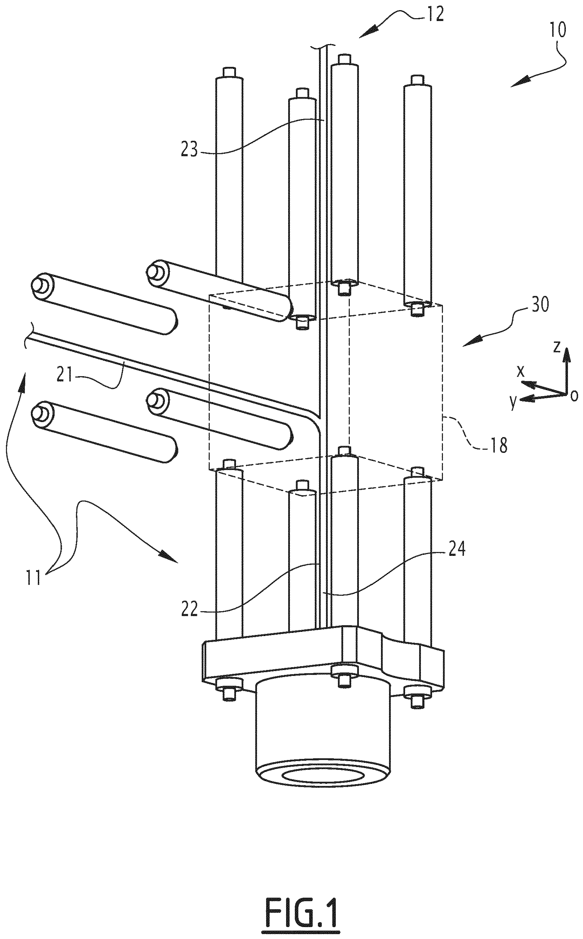

Figure 1 shows an optical system 10 according to the invention. This optical system 10 is for example a multiphoton or a Raman microscope. In a general case, the optical system 10 can by any system where a fine control of polarization is required. It can for example be used to combine two laser beams and/or two detections channels as for multiphoton microscopy, interferometry or quantum optics.

The optical system 10 is configured to propagate a first light beam B1 and a second light beam B2 along respectfully a first light channel 11 and a second light channel 12. In some embodiments, the optical system 10 is configured to propagate only the first light beam B1 along the first light channel 11.

The first light channel 11 forms at least a first rectilinear portion 21 and a second rectilinear portion 22 designed to cross the first rectilinear portion 21 with a predetermined crossing angle in a splitting/mixing zone 18 of the optical system 10. This predetermined crossing angle is advantageously equal to 90° and as it will be apparent in the further description, is formed by rectilinear extensions of these portions 21, 22 in the splitting/mixing zone 18. The first light channel 11 may propagate the first beam light beam B1 according to both directions: from the first rectilinear portion 21 to the second rectilinear portion 22, or from the second rectilinear portion 22 to the first rectilinear portion 21. The spectral range of the first light beam B1 may for example the excitation light for Raman, fluorescence and/or second harmonic generation.

The second light channel 12 forms a third rectilinear portion 23 and a fourth rectilinear portion 24 designed to extend the third rectilinear portion 23. As shown in Figure 1, the fourth rectilinear portion 24 coincides with the second rectilinear portion 22 of the first light channel 11. In other words, the angle between the third rectilinear portion 23 and the fourth rectilinear portion 24 is advantageously equal to 180° and as it will be apparent in the further description, is formed by rectilinear extensions of these portions 23, 24 in the splitting/mixing zone 18. The angle between the third rectilinear portion 23 and the first rectilinear portion 21 is advantageously equal to 90°. As the first light channel 11, the second light channel 12 may propagate the second light beam B2 according to both directions: from the third rectilinear portion 23 to the fourth rectilinear portion 24, or from the fourth rectilinear portion 24 to the third rectilinear portion 23. The spectral range of the second light beam B2 may for example adapted to the detection of Raman, fluorescence and/or second harmonic signals.

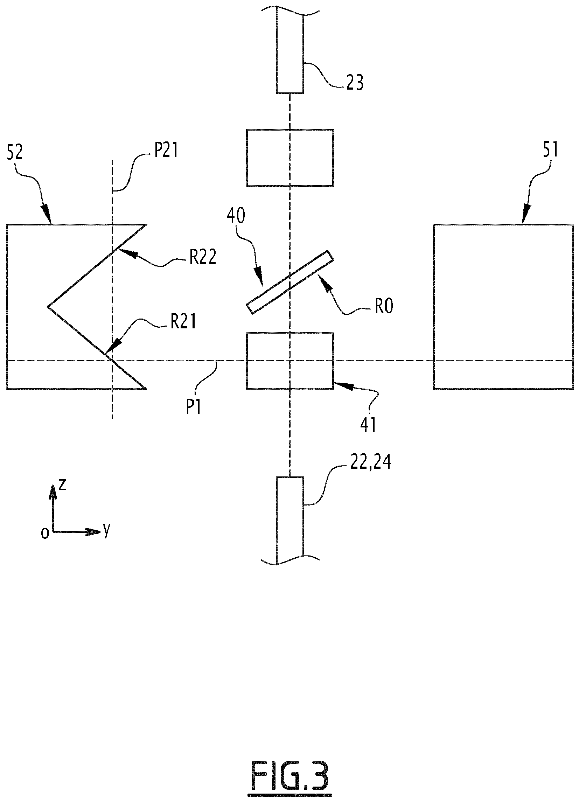

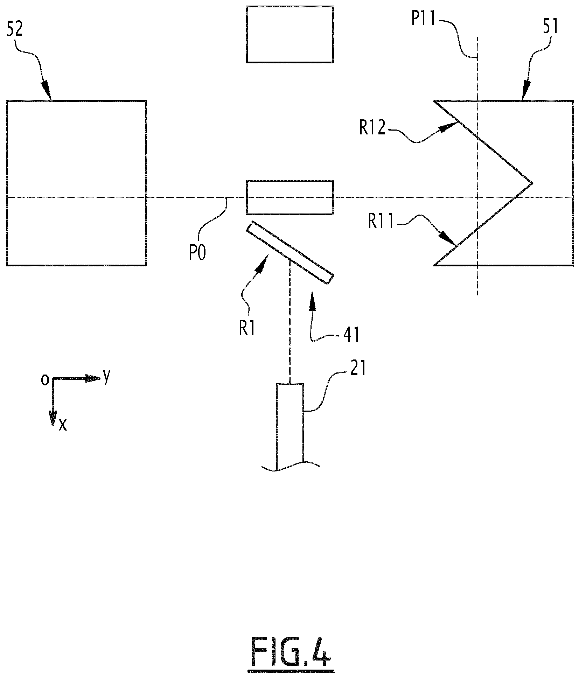

In the example of Figure 1, the first rectilinear portion 21 extends according to axis X and the second, third and fourth rectilinear portions 22, 23, 24 extend according to axis Z, perpendicular to axis X. Axis Y is perpendicular to each of axis X and axis Z. As it is shown in Figure 1, axes X, Y and Z form an orthogonal basis with centre O. In this basis, the view of Figure 3 corresponds to a plane view according to plane ZOY and the view of Figure 4 corresponds to a plane view according to plane XOY.

Depending on the application of the optical system 10, the splitting/mixing zone 18 is designed to mix the light beams B1, B2 issued from different portions of the light channels 11, 12 (i.e. respectfully the first and third rectilinear portions 21, 23) into their common portion (i.e. the second and fourth rectilinear portions 22, 24), or to split the light beams B1, B2 issued from the common portion (i.e. the second and fourth rectilinear portions 22, 24) into different portions of the light channels 11, 12 (i.e. respectfully the first and third rectilinear portions 21, 23).

For this purpose, the splitting/mixing zone 18 is designed to receive a beam splitting/mixing module 30 configured to propagate the light beams B1, B2 as explained above, without distorting their polarisation states.

For example, the splitting/mixing zone 18 may comprise all necessary fixing means to cooperate with a casing of the beam splitting/mixing module 30 to fix it firmly in the zone 18, according to a predetermined position. For example, the casing of the beam splitting/mixing module 30 may comprise at least three holes: a first hole designed to be arranged in the extension of the first rectilinear portion 21, a second hole designed to be arranged in the extension of the third rectilinear portion 23 and a third hole designed to be arranged in the extension of the common portion formed by the second and fourth rectilinear portions 22, 24. Thus, the fixing means may be adapted to position these holes of the casing in the extension of the corresponding rectilinear portions.

Advantageously, the beam splitting/mixing module 30 presents a replaceable module which can be easily replaced by another similar module. For this purpose, the fixing means present for example actuators which can be actuated by a user to lock/unlock the beam splitting/mixing module 30 in/from the splitting/mixing zone 18.

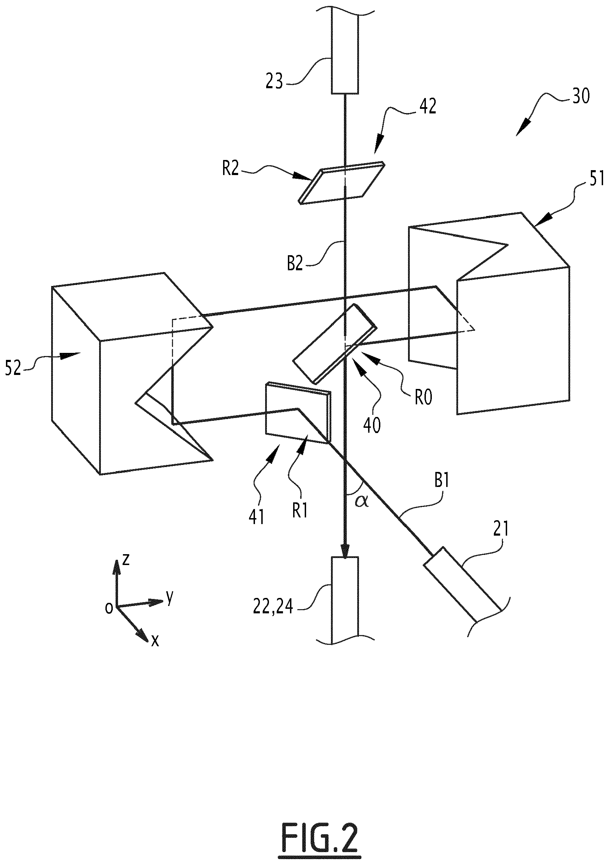

The interior elements of the beam splitting/mixing module 30 are schematically shown in Figure 2. As it is shown in this Figure 3, the beam splitting/mixing module 30 comprises three optical elements 40, 41, 42 and a pair of corner mirrors 51, 52. The beam splitting/mixing module 30 further comprises supporting means (not shown in the Figures) designed to fix the elements 40, 41, 42 and the mirrors 51, 52 according to positions explained in detail below.

The optical elements 40, 41, 42 are substantially identical between them and present in particular, identical reflecting and refracting properties. Each optical element 40, 41, 42 is configured to reflect the first light beam B1 and to transmit the second light beam B2, with a distortion of its polarisation state. Each optical element 40, 41, 42 is formed for example by a dichroic mirror or a plate beam splitter.

As known as such, each optical element 40, 41, 42 defines a reflecting surface R and at least one plane of incidence P. The reflecting surface R is a physical surface of the corresponding optical element which reflects or transmits the light beams depending on the spectral range of the beams. Each reflecting surface R is advantageously substantially flat. The plane of incidence P is a virtual plane which is perpendicular to the corresponding reflecting surface R. The plane of incidence P contains each incident light beam and the corresponding reflected or refracted light beam.

Based on their respective arrangements, the optical elements 40, 41, 42 form a main optical element 40, a first compensating optical element 41 and a second compensating optical element 42.

The main optical element 40 is arranged in an extension of the second and the fourth rectilinear portions 22, 24. As it is visible in Figure 3, the reflecting surface R0 of the main optical element 40 forms an angle of substantially 45° with said extension of the second and the fourth rectilinear portions 22, 24. Particularly, in the example of Figure 2, the reflecting surface R0 of the main optical element 40 forms an angle of substantially 45° with each of the planes XOY and ZOX, and is perpendicular to the plane ZOY.

The first compensating optical element 41 is arranged in an extension of the first rectilinear portion 21. As it is shown in Figure 4, the reflecting surface R1 of the first compensating optical element 41 forms an angle of substantially 45° with said extension of the first rectilinear portion 21. Particularly, in the example of Figure 2, the reflecting surface R1 of the first compensating optical element 41 forms an angle of substantially 45° with each of the planes ZOY and ZOX, and is perpendicular to the plane XOY. Additionally, according to axis X, the first compensating optical element 41 is arranged in offset with the main optical element 40 so as the light beams reflected/transmitted by the main optical element 40 do not interact with the first compensating element 41.

The second compensating optical element 42 is arranged in an extension of the third rectilinear portion 23. The reflecting surface R2 of the second compensating optical element 42 forms an angle of substantially 45° with said extension of the third rectilinear portion 23. Particularly, in the example of Figure 2, the reflecting surface R2 of the second compensating optical element 42 forms an angle of substantially 45° with each of the planes XOY and ZOY, and is perpendicular to the plane ZOX. Additionally, the second compensating optical element 42 is aligned with the main optical element 40 according to axis Z. In other words, the second compensating optical element 42 and the main optical element 40 are arranged to transmit the second light beam according to a rectilinear line extending the third and the fourth rectilinear portions 23, 24, without distortion of its initial polarisation state.

The corner mirrors 51, 52 are arranged to guide the first light beam B1 between the main optical element 40 and the first compensating optical element 41 by reflecting the first light beam B1 without distortion of its polarization state. For this purpose, each corner mirror 51, 52 comprises two reflecting surfaces R defining a common plane of incidence P perpendicular to each reflecting surface R. The two reflecting surfaces R of each corner mirror 51, 52 are arranged perpendicular to each other. The corner mirrors 51, 52 are for example identical between them and arranged differently in respect with the main optical element 40 and the first compensating element 41 as it will be explained below. Each reflecting surface R corresponds for example to a conventional mirror reflecting a light beam without distortion of its polarisation state.

Particularly, a first corner mirror 51 is arranged so as the common plane of incidence P11 of its reflecting surfaces R11, R12 is perpendicular to the plane of incidence P0 of the main optical element 40, as it is visible in Figure 4. A second corner mirror 52 is arranged so as the common plane of incidence P21 of its reflecting surfaces R21, R22 is perpendicular to the plane of incidence P1 of the compensating optical element 41, as it is visible in Figure 3.

Additionally, the reflecting surface R11 of the first corner mirror 51 faces the reflecting surface R0 of the main optical element 40 and the reflecting surface R21 of the second corner mirror 52 faces the reflecting surface R1 of the first compensating optical element 41. Finally, the reflecting surface R12 of the first corner mirror 51 faces the reflecting surface R22 of the second corner mirror 51.

The operation of the beam splitting/mixing module 30 will now be explained in reference to Figure 2.

As previously mentioned, the beam splitting/mixing module 30 allows splitting or mixing the light beams B1, B2 depending on their propagation direction along the channels 11, 12. In the following description, it is supposed that the beam splitting/mixing module 30 mixes the light beams B1, B2. The splitting case may be carried out in a similar way, inverting the directions of the light beams. It is also supposed that initially two separated light beams B1, B2 are guided respectively by the first rectilinear portion 21 of the first light channel 11 and the third rectilinear portion 23 of the second light channel 12.

Upon entering the beam splitting/mixing module 30, the first light beam B1 is reflected by the first compensating optical element 41 toward the reflecting surface R21 of the second corner mirror 52. This reflection is carried out with a distortion, denoted as -d1, of its polarisation state. Then, the first light beam B1 is reflected by the reflecting surface R21 toward the reflecting surface R22 of the second corner mirror 52 and then, toward the reflecting surface R12 of the first corner mirror 51 to be reflected then by the reflecting surface R11 of this first corner mirror 51. Then, it is reflected by this reflecting surface R11 toward the main optical element 40. All these reflections by the reflecting surfaces R21, R22, R12 and R11 are carried out without distortion of the polarisation state of the first light beam B1. Finally, the first light beam B1 is reflected by the main optical element 40 toward the second rectilinear portion 22 of the first light channel 11. Due to the respective arrangements of the main optical element 40 and the first compensating optical element 41, the last reflection is carried out with a distortion of the polarisation state of the first light beam B1 which is denoted as d1 and is opposite to the distortion -d1. In other words, the distortion d1 compensates the distortion -d1 since it is done with an identical optical element but in an inverse way. As it is shown in Figure 2, the upstream portion of the first light beam B1 (i.e. its portion at the entrance of the module 30) forms the crossing angle α substantially equal to 90° with the downstream portion of this light beam B1 (i.e. its portion at the exit of the module 30).

Upon entering the beam splitting/mixing module 30, the second light beam B2 is transmitted by the second compensating element 42 with distortion -d2 of its polarisation state, toward the main optical element 40 which transmits it toward the fourth rectilinear portion 24 where it is mixed with the first light beam B1. Due to the respective arrangements of the main optical element 40 and the second compensating optical element 42, the last transmission is carried out with a distortion of the polarisation state of the second light beam B2 which is denoted d2 and is opposite to the distortion -d2. In other words, the distortion d2 compensates the distortion -d2 since it is done with an identical optical element but in an inverse way.

In this manner, the light beams B1, B2 are mixed in the common portion of the first and second light channels 11, 12. The initial polarisation state of each of these light beams B1, B2 is preserved due to the respective arrangements of the optical elements 40, 41, 42 and the corner mirrors 51, 52.

## Claims

1. A beam splitting/mixing module (30) for an optical system (10) configured to propagate a first light beam (B1) along a first light channel (11), the first light channel (11) forming at least a first rectilinear portion (21) and a second rectilinear portion (22) designed to cross the first rectilinear portion (21) with a predetermined crossing angle in a splitting/mixing zone (18) of the optical system (10);
the beam splitting/mixing module (30) being designed to be arranged in the splitting/mixing zone (18) of the optical system (10) and comprising:
- a main optical element (40) designed to be arranged in an extension of the second rectilinear portion (22) and being able to reflect the first light beam (B1) with a distortion of its polarization state;
- a first compensating optical element (41) identical to the main optical element (40), designed to be arranged in an extension of the first rectilinear portion (21) and able to reflect the first light beam (B1) with a distortion of its polarization state opposite to said distortion of the main optical element (40);
- a pair of corner mirrors (51, 52) arranged to guide the first light beam (B1) between the main optical element (40) and the first compensating optical element (41) by reflecting the first light beam (B1) without distortion of its polarization state.

2. The beam splitting/mixing module (30) according to claim 1, wherein the main optical element (40) defines a reflecting surface (R0) arranged to form an angle of substantially 45° with said extension of the second rectilinear portion (22).

3. The beam splitting/mixing module (30) according to claim 1 or 2, wherein the first compensating optical element (41) defines a reflecting surface (R1) arranged to form an angle of substantially 45° with said extension of the first rectilinear portion (21).

4. The beam splitting/mixing module (30) according to claim 2 and 3, wherein:
- the main optical element (40) defines a plane of incidence (P0) perpendicular to its reflecting surface (R0);
- the first compensating optical element (41) defines a plane of incidence (P1) perpendicular to its reflecting surface (R1);
- said planes of incidence (P0, P1) are perpendicular to each other.

5. The beam splitting/mixing module (30) according to any one of the preceding claims, wherein each corner mirror (51, 52) comprises two reflecting surfaces (R11, R12, R21, R22) defining a common plane of incidence (P11, P21).

6. The beam splitting/mixing module (30) according to claims 4 and 5, wherein the pair of corner mirrors (51, 52) comprises:
- a first corner mirror (51) arranged so as the common plane of incidence (P11) of its reflecting surfaces (R11, R12) is perpendicular to the plane of incidence (P0) of the main optical element (40);
- a second corner mirror (52) arranged so as the common plane of incidence (P21) of its reflecting surfaces (R21, R22) is perpendicular to the plane of incidence (P1) of the first compensating optical element (41).

7. The beam splitting/mixing module (30) according to claim 6 taken in combination with claims 2 and 3, wherein:
- one of the reflecting surfaces (R11) of the first corner mirror (51) faces the reflecting surface (R0) of the main optical element (40);
- one of the reflecting surfaces (R21) of the second corner mirror (52) faces the reflecting surface (R1) of the first compensating optical element (41).

8. The beam splitting/mixing module (30) according to claim 7, wherein the other reflecting surface (R12) of the first corner mirror (51) faces the other reflecting surface (R22) of the second corner mirror (52).

9. The beam splitting/mixing module (30) according to any one of claims 5 to 8, wherein said two reflecting surfaces (R11, R12, R21, R22) of each corner mirror (51, 52) are arranged perpendicular to each other.

10. The beam splitting/mixing module (30) according to any one of claims 5 to 9, wherein said common planes of incidence (P11, P12) of the corner mirrors (51, 52) are perpendicular to each other.

11. The beam splitting/mixing module (30) according to any one of the preceding claims, wherein:
- the optical system (10) is further configured to propagate a second light beam (B2) along a second light channel (12), the second light channel (12) forming at least a third rectilinear portion (23) and a fourth rectilinear portion (24) designed to extend the third rectilinear portion (23), the fourth rectilinear (24) portion coinciding with the second rectilinear portion (22) of the first light channel (11);
- the main optical element (40) is able to transmit the second light beam (B2) with a distortion of its polarization state.

12. The beam splitting/mixing module (30) according to claim 11, further comprising a second compensating optical element (42) identical to the main optical element (40), designed to be arranged in an extension of the third rectilinear portion (23) and able to transmit the second light beam (B2) with a distortion of its polarization state opposite to the distortion of the main optical element (40) in respect with the second light beam (B2).

13. The beam splitting/mixing module (30) according to claim 12, wherein the second compensating optical element (42) defines a reflecting surface (R2) arranged to form an angle of substantially 45° with said extension of the third rectilinear portion (23).

14. The beam splitting/mixing module (30) according to claim 13 taken in combination with claim 4, wherein the second compensating optical element (42) defines a plane of incidence (P2) perpendicular to its reflecting surface (R2), said plane of incidence (P2) being perpendicular to the plane of incidence (P0) of the main optical element (40) and to the plane of incidence (P1) of the first compensating element (41).

15. An optical system (10) configured to propagate a first light beam (B1) along a first light channel (11), the first light channel forming at least a first rectilinear portion (11) and a second rectilinear portion (12) designed to cross the first rectilinear portion with a predetermined crossing angle in a splitting/mixing zone (18) of the optical system (10);
wherein the splitting/mixing zone (18) comprises a beam splitting/mixing module (30) according to any one of the preceding claims.
